(19) Europäisches Patentamt
European Patent Office
Office européen des brevets

(11) Publication number: 0 273 669 B1

(12) EUROPEAN PATENT SPECIFICATION

(45) Date of publication of patent specification: 01.07.92

(51) Int. Cl.5: A01N 43/56, //(A01N43/56, 43:40)

(21) Application number: 87311252.8

(22) Date of filing: 21.12.87

# (54) Herbicidal method comprising the use of diflufenican.

(30) Priority: 23.12.86 GB 8630697

(43) Date of publication of application:
06.07.88 Bulletin 88/27

(45) Publication of the grant of the patent:
01.07.92 Bulletin 92/27

(84) Designated Contracting States:
AT BE CH DE ES FR GB GR IT LI LU NL SE

(56) References cited:
EP-A- 0 053 011

(73) Proprietor: MAY & BAKER LIMITED

Dagenham Essex RM10 7XS(GB)

(72) Inventor: Hewett, Richard Henry
May & Baker Limited
Dagenham Essex, RM10 7XS(GB)
Inventor: Luscombe, Brian Malcolm
May & Baker Limited
Dagenham Essex, RM10 7XS(GB)

(74) Representative: Bentham, Stephen et al
J.A. Kemp & Co. 14 South Square Gray's Inn
London WC1R 5EU(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 273 669 B1

## Description

The present invention relates to new herbicidal compositions comprising N-(2,4-difluorophenyl)-2-(3-trifluoromethylphenoxy)nicotinamide of formula I depicted hereinafter, which is disclosed in the specification of British Patent No. 2087887B as a pre- and/or post-emergence herbicide, and to their use in agriculture.

Difenzoquat - that is 1,2-dimethyl-3,5-diphenyl-pyrazolium ion - as its agriculturally acceptable salts, especially the methyl sulphate, are used on a large scale for post-emergence control of wild oats, Avena fatua, Avena ludoviciana, Avena sativa and Avena barbata in cereal crops.

In this specification, where the context so permits, the term "difenzoquat" is meant to embrace the parent ion or an agriculturally acceptable salt of difenzoquat, more especially the methyl sulphate, difenzoquat methyl sulphate,

Difenzoquat has no useful activity against broad-leaf weeds, and attempts to broaden its spectrum by mixing with broad-leaf weed control materials e.g. phenoxyalkanoic acid herbicides as metal salts, have failed due to antagonism on wild oats.

As a result of research and experimentation it has now been discovered that the use of the compound N-(2,4-difluorophenyl)-2-(3-trifluoromethylphenoxy)-nicotinamide (hereinafter referred to as diflufenican) in combination with difenzoquat adds to the capabilities of the difenzoquat by controlling a wide spectrum of broad-leaf weeds by both foliar activity and residual soil activity.

In addition to this it has been found that the combined herbicidal activity of combinations of diflufenican with difenzoquat against certain broad-leaf weed species, e.g. Galium aparine, and the grass weed wild oats Avena fatua is greater than expected when applied post-emergence (e.g. as a post-emergence spray), that is the herbicidal activity of combinations of diflufenican with difenzoquat showed an unexpected degree of synergism [as defined by P.M.L. Tammes, Netherlands Journal of Plant Pathology, 70 (1964), pp 73-80 in a paper entitled "Isoboles, a graphic representation of synergism in pesticides"].

The remarkable synergistic effect of the mixture applied post-emergence gives improved reliability of control of weed species occurring in cereal cultures and allows for a reduction in the amount of active ingredient employed.

Accordingly the present invention provides a method for the control of the growth of weeds at a cereal crop locus which comprises applying to the locus, post-emergence of the weeds, (a) an agriculturally acceptable 1,2-dimethyl-3,5-diphenyl-pyrazolium salt, especially the methyl sulphate thereof, and (b) diflufenican, which is N-(2,4-difluorophenyl)-2-(3-trifluoromethylphenoxy)-nicotinamide. Preferably the application rates of (a) and (b) are from 500 to 1500, more preferably from 750 to 1200, g ion equivalent (i.e.)-/ha of (a) and from 25 to 250 g/ha of (b), in proportions of 60:1 to 2:1 and preferably 48:1 to 3:1 w/w of (a) to (b). The method of the invention may be used to control a broad spectrum of weed species in cereal crops, e.g. wheat or barley, by application pre- or post-emergence of the crop without significant permanent damage to the crop. The combined use described above provides both foliar and residual activity.

By the term 'post-emergence application', unless otherwise specified, is meant application to the aerial or exposed portions of the weeds which have emerged above the surface of the soil. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by the method include:- from broad-leaf weeds, Abutilon theophrasti, Amaranthus retroflexus, Amsinckia intermedia, Anagallis arvensis, Anthemis arvensis, Anthemis cotula, Atriplex patula, Brassica nigra, Capsella bursa-pastoris, Chenopodium album, Cirsium arvense Datura stramonium, Euphorbia helioscopia, Galeopsis tetrahit, Galium aparine, Lamium amplexicaule, Lamium purpureum, Matricaria inodora, Myosotis arvensis, Papaver rhoeas, Plantago lanceolata, Polygonum spp. (e.g. Polygonum aviculare, Polygonum convolvulus and Polygonum persicaria), Portulaca oleracea, Raphanus raphanistrum, Senecio vulgaris, Sesbania florida, Sida spinosa, Silene alba, Sinapis arvensis, Solanum nigrum, Stellaria media, Thlaspi arvense, Urtica urens, Veronica hederifolia, Veronica persica and Viola arvensis, and from grass weeds, Avena spp. (e.g. Avena fatua, Avena ludoviciana, Avena sterilis and Avena barbata).

In accordance with usual practice, a tank mix may be prepared prior to use by combining separate formulations of the individual herbicidal components, or separate formulations may be applied in a time-separated manner.

The following greenhouse experiment illustrates the present invention by demonstrating the synergistic activity of difenzoquat methyl sulphate and diflufenican in controlling the growth of Galium aparine and

Avena fatua.

EXPERIMENT 1

Greenhouse experiment showing the nature of biological synergism between difenzoquat methyl sulphate and diflufenican

A wide range of doses of difenzoquat as the methyl sulphate, i.e. 62.5, 125, 250, 500 and 1000 g/ha (as the commercial formulation "Avenge 2" (Trade Mark) containing 15% w/v difenzoquat as the methyl sulphate), and of diflufenican, i.e. 31.25, 62.5, 125, 250 and 500 g/ha (in a composition according to Example 1 as described hereinafter), were applied at a spray volume of 290 l/ha to sets of four replicate 7.5 cm square pots of loam soil each planted with 4 Galium aparine plants at the 2 whorl stage and 10 Avena fatua plants at the 1 leaf stage. After spraying, the pots were arranged in randomised blocks in a greenhouse, watered as necessary, and assessed after 17 days for percentage phytotoxicity (reduction in green area compared with unsprayed plants)(0 = no effect, 100 = complete destruction).

From these results the $ED_{90}$ values (effective dose giving 90% phytotoxicity) in grams of diflufenican per hectare, for Galium aparine and Avena fatua respectively, were calculated for diflufenican alone and for diflufenican with increasing rates of difenzoquat methyl sulphate.

Difenzoquat methyl sulphate applied alone was found to have no activity on Galium aparine.

The $ED_{90}$ values for Galium aparine were as follows:

| | $ED_{90}$ |
|---|---|
| Diflufenican alone | 198 |
| Diflufenican with 62.5 g difenzoquat as the methyl sulphate/ha | 59 |
| Diflufenican with 125 g difenzoquat as the methyl sulphate/ha | 43 |
| Diflufenican with 250 g difenzoquat as the methyl sulphate/ha | 64 |
| Diflufenican with 500 g difenzoquat as the methyl sulphate/ha | 14 |
| Diflufenican with 1000 g difenzoquat as the methyl sulphate/ha | 27 |

and the $ED_{90}$ values for Avena fatua were:-

| | $ED_{90}$ |
|---|---|
| Diflufenican alone | 2810 |
| Diflufenican with 62.5 g difenzoquat as the methyl sulphate/ha | 1034 |
| Diflufenican with 125 g difenzoquat as the methyl sulphate/ha | 792 |
| Diflufenican with 250 g difenzoquat as the methyl sulphate/ha | 405 |
| Diflufenican with 500 g difenzoquat as the methyl sulphate/ha | 165 |
| Diflufenican with 1000 g difenzoquat as the methyl sulphate/ha | 31 |

The $ED_{90}$ for difenzoquat alone was 1032g/ha.

The results for Galium aparine were then used to plot an isobole with a "one-sided effect" according to the methods of P.M.L. Tammes, op. cit. The isobole produced, shown hereinafter in Figure I, was clearly a type II curve (Tammes, op. cit., page 74), characteristic of synergism.

The results for Avena fatua were then used to plot an isobole with a "two-sided effect" according to the methods of P.M.L. Tammes, op. cit. The isobole produced, shown hereinafter in Figure II, was clearly a type III curve (Tammes, op. cit., page 75), characteristic of synergism.

According to a further feature of the present invention, there is provided a product comprising (a) an agriculturally acceptable salt of difenzoquat, especially the methyl sulphate thereof, and (b) diflufenican as a combined preparation for simultaneous, separate or sequential use in controlling the growth of weeds at a cereal crop locus.

According to a further feature of the present invention, there are provided compositions suitable for herbicidal use comprising (a) an agriculturally acceptable salt of difenzoquat, especially the methyl sulphate thereof, and (b) diflufenican, for example in proportions of 60:1 to 2:1, preferably 48:1 to 3:1, w/w of ion equivalent (a) to (b) in association with, and preferably homogeneously dispersed in, a herbicidally-acceptable diluent or carrier and/or surface-active agent. Suitable diluents or carriers or surface-active agents are of the type generally accepted in the art as being suitable for use in herbicidal compositions and which are compatible with difenzoquat and diflufenican. The term "homogeneously dispersed" is used to include compositions in which difenzoquat and diflufenican are dissolved in the other components. The term "herbicidal compositions" is used in a broad sense to include not only compositions which are ready for use as herbicides but also concentrates which must be diluted before use. Preferably, the compositions contain from 0.05 to 90% by weight of difenzoquat and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, products based on condensates of ethylene oxide with nonyl- or octyl- phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate,

powdered cork, adsorbent carbon black and clays such as kaolin and bentonite. The solid compositions (which may take the form of dusts, granules or wettable powders) are preferably prepared by grinding difenzoquat and diflufenican with solid diluents or by impregnating the solid diluents or carriers with solutions of difenzoquat and diflufenican in volatile solvents, evaporating the solvents and, if necessary, grinding the products so as to obtain powders. Granular formulations may be prepared by absorbing difenzoquat and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of difenzoquat and diflufenican may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of difenzoquat and diflufenican, from 2 to 10% w/v of surface-active agent, from 0.1 to 5% w/v of thickener and from 15 to 87.9% by volume of water; wettable powders which comprise from 10 to 90% w/w of difenzoquat and diflufenican, from 2 to 10% w/w of surface-active agent and from 8 to 88% w/w of solid diluent or carrier; liquid water soluble concentrates which comprise from 5 to 20% w/v of difenzoquat and diflufenican, from 5 to 25% w/v of surface-active agent and from 55 to 90% by volume of water-miscible solvent, e.g. dimethylformamide; liquid emulsifiable suspension concentrates which comprise 10 to 70% w/v of difenzoquat and diflufenican, from 5 to 15% w/v of surface-active agent, from 0.1 to 5% w/v of thickener and from 10 to 84.9% by volume of organic solvent; granules which comprise from 2 to 10% w/w of difenzoquat and diflufenican, from 0.5 to 2% w/w of surface-active agent and from 88 to 97.5% w/w of granular carrier and water dispersible granules which comprise from 10 to 90% w/v of difenzoquat and diflufenican, from 1 to 20% w/v of surfaceactive agent and from 9 to 89% by weight of binder and/or filler.

Herbicidal compositions according to the present invention may also comprise difenzoquat and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example chlortoluron [N′-(3-chloro-4-methylphenyl)-N,N-dimethylurea], cyanazine [2-chloro-4-(1-cyano-1-methylethylamino)-6-ethylamino-1,3,5-triazine], isoproturon [N′-(4-isopropylphenyl)-N,N-dimethylurea], linuron [N′-(3,4-dichlorophenyl)-N-methoxy-N-methylurea], MCPA [4-chloro-2-methylphenoxyacetic acid] as esters or amine salts, at low doses e.g. 50-200 g of MCPA/ha, hydroxybenzonitriles, e.g. bromoxynil, as esters or amine salts, sulphonylureas, e.g. chlorsulfuron and metsulfuron-methyl; insecticides, e.g. carbaryl [naphth-1-yl N-methylcarbamate] and synthetic pyrethroids, e.g. permethrin and cypermethrin; and fungicides, e.g. 2,6-dimethyl-4-tridecyl-morpholine, methyl N-(1-butylcarbamoylbenzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3-dimethyl-1-(1,2,4-triazol-1-yl)butan-2-one. Other biologically active materials which may be included in, or used in conjunction with, the herbicidal compositions of the present invention

are plant growth regulators, e.g. (2-chloroethyl)trimethylammonium chloride and 2-chloroethanephosphonic acid; and fertilizers containing, for example, nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

The compositions of the invention may be made up as an article of manufacture comprising difenzoquat and diflufenican and optionally other biologically active compounds as hereinbefore described or, as is preferred, a herbicidal composition as hereinbefore described, and preferably a herbicidal concentrate which must be diluted before use, comprising difenzoquat and diflufenican within a container for the aforesaid difenzoquat and diflufenican or a said herbicidal composition, and instructions physically associated with the aforesaid container setting out the manner in which the aforesaid difenzoquat and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds therein but will not exceed a size which is convenient for conventional methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application from 500 g to 1500 g i.e. of difenzoquat and from 25 g to 250 g of diflufenican per hectare in the manner and for the purposes hereinbefore described.

EXAMPLE 1

An aqueous suspension concentrate was made from:

| | |
|---|---|
| diflufenican | 50% w/v |
| propylene glycol | 5% w/v |
| Olin 10G (Trade Mark) (para-nonylphenoxy polyglycidol) | 0.67% w/v |
| Soprophor FL (Trade Mark) (triethanolamine salt of oxyethylated polyarylphenolphosphate) | 1.33% w/v |
| Antifoam FD (Trade Mark) (silicone antifoam) | 0.01% v/v |
| Rhodigel 23 (Trade Mark) (xanthan gum) | 0.2% w/v |
| dichlorophen sodium solution, 40% w/w | 0.25% w/v |
| water | to 100% by volume |

by blending the diflufenican with an aqueous solution of the Soprophor FL, Antifoam FD and Olin 10G and milling through a bead-mill. An aqueous solution of the Rhodigel 23, dichlorophen sodium solution and propylene glycol is then blended with the milled slurry and made up to volume with water.

EXAMPLE 2

An aqueous suspension concentrate was formed from:-

| | |
|---|---|
| diflufenican | 2.5% w/v |
| difenzoquat as the methyl sulphate and inert ingredients as in Example 1 | 40% w/v |

Five litres of the resulting formulation were diluted in 200 litres of water and applied post-emergence to 1 hectare of winter wheat to control Galium aparine, Stellaria media, Veronica persica, Viola arvensis and

Avena fatua.

EXAMPLE 3

A 60:1 mixture was formed by tank mixing 10 l of the commercial formulation "Avenge 2" with 50 ml of the composition of Example 1 in a volume of 200 l of water. The resulting spray fluid was applied to one hectare of winter wheat to control Avena fatua and Viola arvensis.

EXAMPLE 4

A 2:1 mixture was formed by tank mixing 3.31 of the commercial formulation "Avenge 2" with 500 ml of the composition of Example 1 in a volume of 200 l of water. The resulting spray fluid was applied to one hectare of winter wheat to control Avena fatua, Viola arvensis, Veronica hederifolia and Galium aparine.

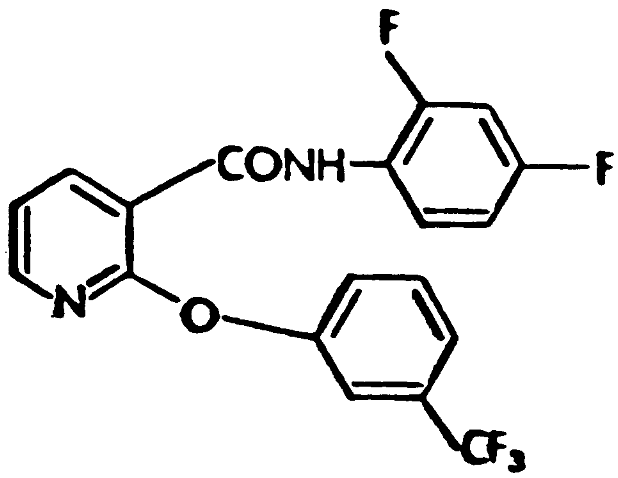

I

## Claims

1. A method of controlling the growth of weeds at a cereal crop locus which comprises applying to the locus, post-emergence of the weeds, (a) an agriculturally acceptable 1,2-dimethyl-3,5-diphenyl-pyrazolium salt and (b) diflufenican which is N-(2,4-difluorophenyl)-2-(3-trifluoromethylphenoxy)-nicotinamide.

2. A method according to claim 1 in which the ion equivalent weight ratio of (a) to (b) is from 60:1 to 2:1 and in which (a) is applied to the locus at a rate of from 500 to 1500 g ion equivalent/ha and (b) at a rate of from 25 to 250 g/ha.

3. A method according to claim 1 in which the ion equivalent weight ratio of (a) to (b) is from 48:1 to 3:1 and in which (a) is applied to the locus at a rate of from 750 to 1200 g ion equivalent/ha and (b) at a rate of from 25 to 250 g/ha.

4. A method according to claim 1, 2 or 3 in which (a) is 1,2-dimethyl-3,5-diphenyl-pyrazolium methyl sulphate.

5. A product comprising (a) an agriculturally acceptable 1,2-dimethyl-3,5-diphenyl-pyrazolium salt and (b) diflufenican, which is N-(2,4-difluorophenyl)-2-(3-trifluoromethylphenoxy)nicotinamide, as a combined preparation for simultaneous, separate or sequential use in controlling the growth of weeds at a cereal crop locus.

6. A product according to claim 5 in which (a) is 1,2-dimethyl-3,5-diphenyl-pyrazolium methyl sulphate.

**7.** A herbicidal composition which comprises (a) an agriculturally acceptable 1,2-dimethyl-3,5-diphenyl-pyrazolium salt and (b) diflufenican, which is N-(2,4-difluorophenyl)-2-(3-trifluoromethylphenoxy)-nicotinamide, in association with a herbicidally acceptable diluent or carrier and/or surface active agent.

**8.** A herbicidal composition according to claim 7 in which the ion equivalent weight ratio of (a) to (b) is from 60:1 to 2:1.

**9.** A herbicidal composition according to claim 7 or 8 in which the ion equivalent weight ratio of (a) to (b) is from 48:1 to 3:1.

**10.** A herbicidal composition according to claim 7, 8 or 9 in which (a) is 1,2-dimethyl-3,5-diphenyl-pyrazolium methyl sulphate.

**Revendications**

**1.** Procédé pour maîtriser la croissance des mauvaises herbes sur un site céréalier, qui comprend l'application au site, en post-émergence des mauvaises herbes,
(a) d'un sel de 1,2-diméthyl-3,5-diphényl-pyrazolium acceptable du point de vue agricole et
(b) de Diflufenican qui est le N-(2,4-difluorophényl)-2-(3-trifluorométhylphénoxy)nicotinamide.

**2.** Procédé selon la revendication 1, dans lequel le rapport pondéral d'équivalents ioniques de (a) à (b) est de 60:1 à 2:1 et dans lequel (a) est appliqué sur le site à raison de 500 à 1 500 g équivalents ioniques/ha et (b) est appliqué à raison de 25 à 250 g/ha.

**3.** Procédé selon la revendication 1, dans lequel le rapport pondéral d'équivalents ioniques de (a) à (b) est de 48:1 à 3:1 et dans lequel (a) est appliqué sur le site à raison de 750 à 1 200 g d'équivalents ioniques/ha et (b) est appliqué à raison de 25 à 250 g/ha.

**4.** Procédé selon la revendication 1, 2 ou 3 dans lequel (a) est le méthylsulfate de 1,2-diméthyl-3,5-diphényl-pyrazolium.

**5.** Produit comprenant (a) un sel de 1,2-diméthyl-3,5-diphényl-pyrazolium acceptable du point de vue agricole et (b) du Diflufenican qui est le N-(2,4-difluorophényl)-2-(3-trifluorométhylphénoxy)nicotinamide, sous forme d'une préparation combinée destinée à être utilisée simultanément, séparément ou successivement pour maîtriser la croissance de mauvaises herbes sur un site céréalier.

**6.** Produit selon la revendication 5, dans lequel (a) est le méthylsulfate de 1,2-diméthyl-3,5-diphényl-pyrazolium.

**7.** Composition herbicide qui comprend (a) un sel de 1,2-diméthyl-3,5-diphényl-pyrazolium acceptable du point de vue agricole et (b) du Diflufenican qui est le N-(2,4-difluorophényl)-2-(3-trifluorométhylphénoxy)nicotinamide, en association avec un diluant ou véhicule et/ou agent tensioactif acceptable du point de vue herbicide.

**8.** Composition herbicide selon la revendication 7, dans laquelle le rapport pondéral d'équivalents ioniques de (a) à (b) est de 60:1 à 2:1.

**9.** Composition herbicide selon la revendication 7 ou 8, dans laquelle le rapport pondéral d'équivalents ioniques de (a) à (b) est de 48:1 à 3:1.

**10.** Composition herbicide selon la revendication 7, 8 ou 9, dans laquelle (a) est le méthylsulfate de 1,2-diméthyl-3,5-diphényl-pyrazolium.

**Patentansprüche**

**1.** Verfahren zur Bekämpfung des Unkrautwachstums in Getreidekulturen durch Applikation oder Ausbringen (an dem jeweiligen Ort) von
(a) einem aus landwirtschaftlichen Gesichtspunkten akzeptablen 1,2-Dimethyl-3,5-diphenylpyrazoliumsalz und
(b) Diflufenican, d.h. N-(2,4-Difluorphenyl)-2-(3-trifluormethylphenoxy)-nicotinamid.

**2.** Verfahren nach Anspruch 1, dadurch gekennzeichnet, daß jeweils pro Hektar Behandlungsort 500 - 1500 g Ionenäquivalent (a) und 25 - 250 g (b) im Ionenäquivalentgewichtsverhältnis (a)/(b) von 60/1 bis 2/1 ausgebracht werden.

**3.** Verfahren nach Anspruch 1, dadurch gekennzeichnet, daß jeweils pro Hektar Behandlungsort 750 - 1200 g Ionenäquivalent (a) und 25 - 250 g (b) im Ionenäquivalentgewichtsverhältnis (a)/(b) von 48/1 bis 3/1 ausgebracht werden.

**4.** Verfahren nach Anspruch 1, 2 oder 3, dadurch gekennzeichnet, daß (a) aus 1,2-Dimethyl-3,5-diphenypyrazoliummethylsulfat besteht.

**5.** Produkt, umfassend
(a) ein aus landwirtschaftlichen Gesichtspunkten akzeptables 1,2-Dimethyl-3,5-diphenylpyrazoliumsalz und
(b) Diflufenican, d.h. N-(2,4-Difluorphenyl)-2-(3-trifluormethylphenoxy)-nicotimamid,
als Kombinationspräparat zum gleichzeitigen, getrennten oder aufeinanderfolgenden Gebrauch bei der Bekämpfung des Wachstums von Unkräutern in Getreidekulturen.

**6.** Produkt nach Anspruch 5, dadurch gekennzeichnet, daß (a) aus 1,2-Dimethyl-3,5-diphenylpyrazoliummethylsulfat besteht.

**7.** Herbizid, umfassend
(a) ein aus landwirtschaftlichen Gesichtspunkten akzeptables 1,2-Dimethyl-3,5-diphenylpyrazoliumsalz und
(b) Diflufenican, d.h. N-(2,4-Difluorphenyl)-2-(3-trifluormethylphenoxy)-nicotinamid
in Verbindung mit einem aus Herbizidgesichtspunkten akzeptablen Verdünnungsmittel oder Träger und/oder oberflächenaktivem Mittel.

**8.** Herbizid nach Anspruch 7, dadurch gekennzeichnet, daß das Ionenäquivalentgewichtsverhältnis (a)/(b) 60/1 bis 2/1 beträgt.

**9.** Herbizid nach Anspruch 7 oder 8, dadurch gekennzeichnet, daß das Ionenäquivalentgewichtsverhältnis (a)/(b) 48/1 bis 3/1 beträgt.

**10.** Herbizid nach Anspruch 7, 8 oder 9, dadurch gekennzeichnet, daß (a) aus 1,2-Dimethyl-3,5-diphenylpyrazoliummethylsulfat besteht.

FIGURE I

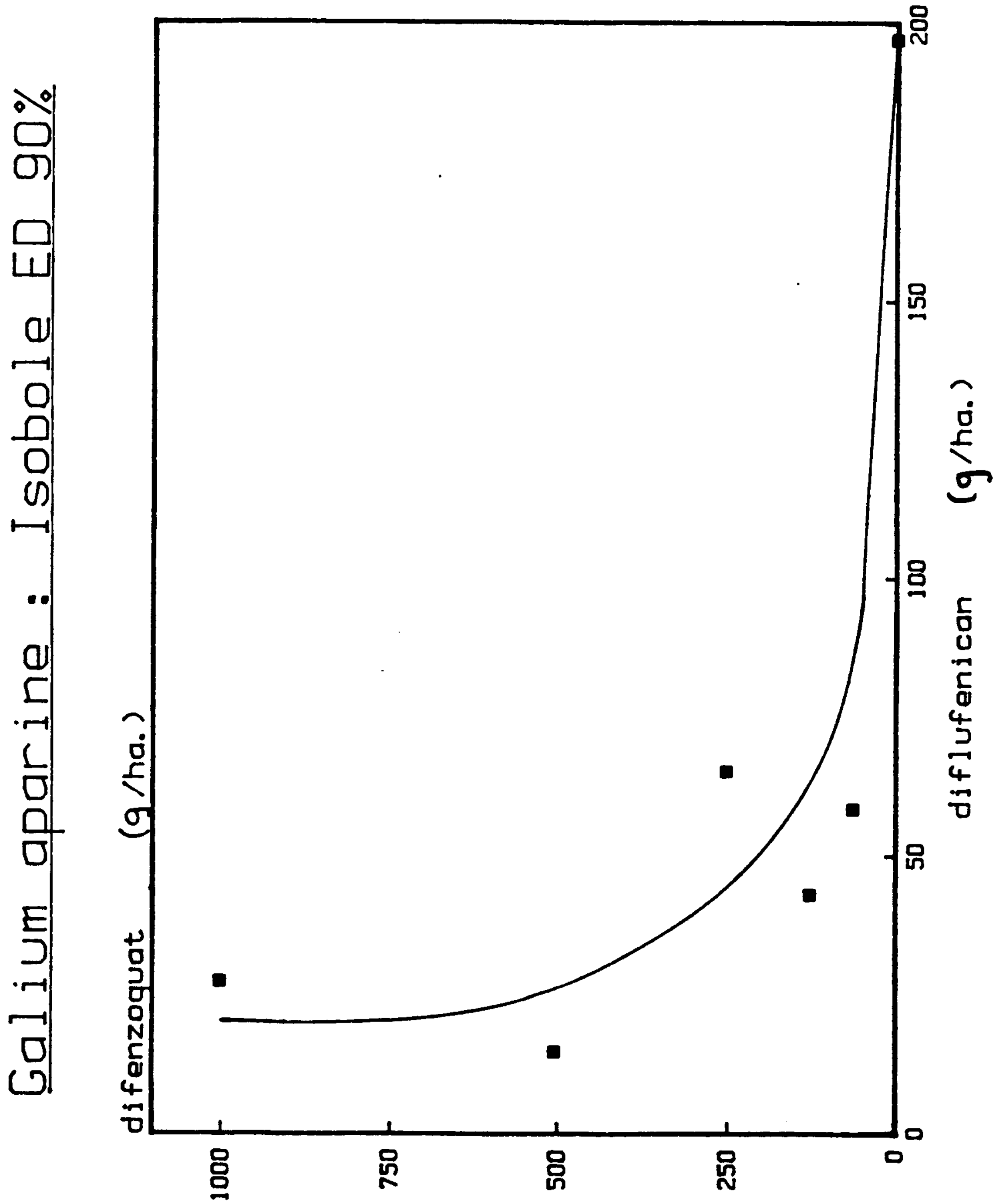

Galium aparine : Isobole ED 90%
difenzoquat (g/ha.)
diflufenican (g/ha.)
0
50
100
150
200
0
250
500
750
1000

FIGURE II

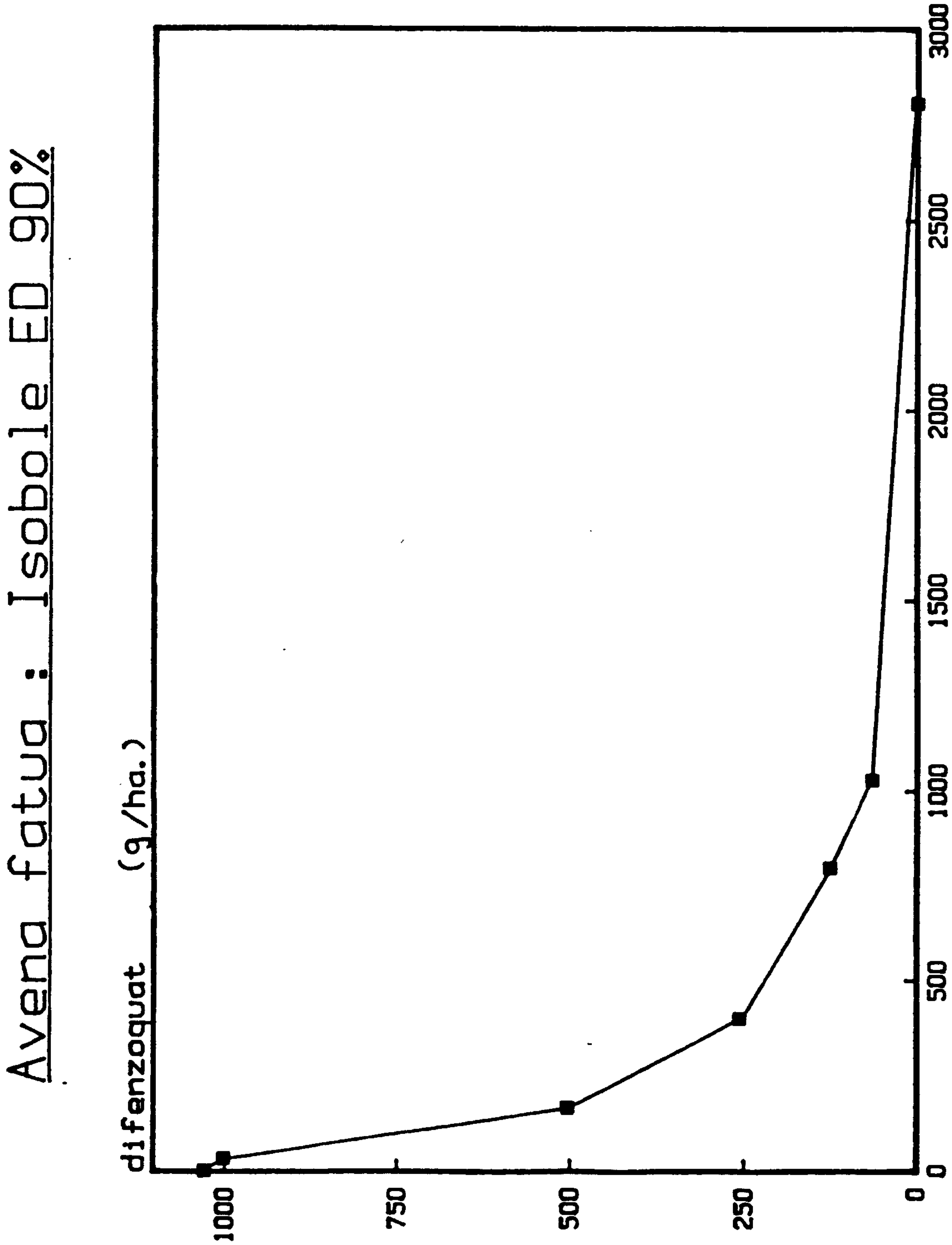
Avena fatua : Isobole ED 90%
difenzoquat (g/ha.)
diflufenican (g/ha.)
1000
750
500
250
0
0
500
1000
1500
2000
2500
3000